Europäisches Patentamt

**European Patent Office**

**Office européen des brevets**

(11) Publication number: **0 267 189**
**B1**

# EUROPEAN PATENT SPECIFICATION

(45) Date of publication of the patent specification:
**27.12.89**

(21) Application number: **86904167.3**

(22) Date of filling: **15.07.86**

(86) International application number:
**PCT/EP 86/00415**

(87) International publication number:
**WO 87/00655 (29.01.87 Gazette 87/03)**

(51) Int. Cl.⁴: **G 05 F 1/59,** H 02 M 3/28

(54) **MONITORING CIRCUIT FOR CONTROL MEANS AND SELECTIVE BREAKAWAY MEANS IN MODULAR SUPPLY SYSTEMS.**

(30) Priority: **16.07.85 IT 2158485**

(43) Date of publication of application:
**18.05.88 Bulletin 88/20**

(45) Publication of the grant of the patent:
**27.12.89 Bulletin 89/52**

(84) Designated Contracting States:
**AT BE CH DE FR GB LI LU NL SE**

(56) References cited:
**DE-A-3 320 885**
**US-A-3 796 919**
**US-A-3 956 638**

(73) Proprietor: **ITALTEL SOCIETA ITALIANA
TELECOMUNICAZIONI s.p.a., P.le Zavattari, 12,
I-20149 Milano (IT)**

(72) Inventor: **LENTINI, Salvatore, Via TS 12 nr. 2,
I-90100 Palermo (IT)**
Inventor: **PATTI, Giuseppe, Via Di Marco, 8,
I-90143 Palermo (IT)**

(74) Representative: **Coggi, Giorgio, ITALTEL Società
Italiana Telecomunicazioni s.p.a. (Servizio
Brevetti) Casella Postale 10, I-20019 Settimo
Milanese (MI) (IT)**

LIBER, STOCKHOLM 1989

## Description

The present invention relates to a monitoring circuit for control means and selective breakaway means in modular power supply systems, particularly for telecommunications equipment. More particularly it relates to a circuit designed to enable the right distribution of the load among the element which compose the system as well as the location and the selective switching off of the units that are out of order. The supply systems of the type described above are usually constituted by a plurality of basic units (such as rectifiers, or inverters, etc.) connected each to the other in parallel. Said type of connection is used for example when the power to be supplied by the system is such as to be not delivered by a single power unit and it is therefore supplied by means of several power units connected in parallel each to the other. In addition to the power units necessary to supply operating power, usually at least another power unit is added, in order to act as a hot reserve to be used in case of failure of one or more of the said operating power units.

A power supply system comprising a plurality of independent voltage regulator circuits, connected in parallel between one or more power sources and a load, is for example described in the Patent US-A-3 796 919.

In said type of systems optimum conditions are obtained when the total current absorbed by the load is equally supplied by the $n$ elementary units, that is when each power unit supplies a current I with a value of It/$n$.

The above circuit arrangement is known, for esample, from US-A-3 956 638, where the discharge current of each battery is monitored in such a way as to reach the average current value. Another circuit arrangement where the load current is equally supplied by all the working power units, is known from DE-OS-3 320 885.

It must be noticed furthermore that when the power units are constituted by inverters, besides the problems concerning the optimization as described above, further new technical problems are registered which are connected to the phase relationship of the oscillations supplied by each inverter. In fact an inverter is constituted by a unit designed to receive a continuous voltage on its input and also adapted to deliver a sinusoidal voltage to the output the frequency of which normally coincides with the frequency of the electrical power distribution line.

The inverters of the previous generation are characterized by the fact that they present an output impedance having a not excessively low value and consequently the problems relating to an equal distribution as described above can be solved through slow control adjustment systems.

On the other hand, modern generation inverters are so confi gured as to approximate an ideal voltage generator and are consequently characterized in that they have a particularly low output impedance. Said impedance value involves the use of means designed to act in such a manner that the oscillations generated by the inverters have at any time the same level and the phase. In fact, if the power system is constituted by $n$ elementary units, one of which supplies an oscillation that is shifted in phase with respect to the oscillations generates by the further n-1 units, the power delivered by the n-1 units is poured into the unit that is out of phase, causing its possible damage and consequently reducing the power supplied to the load.

The basic technical problem of the present invention is therefore how to realize a supply system having a monitoring circuit particularly fast and designed to allow level and phase variations in the oscillations, generated by each inverter, in a time as short as possible, short as in order to minimize the duration of the negative effects caused by a possible phase shift as describe above and consequently to avoid danger of damage.

Purpose of the present invention is to solve the aforementioned technical problem through the use of circuit particularly simple and economic.

For this purpose and according to the present invention the supply system is of the type comprising $n$ elementary power units, connected in parallel each to the other each of which having control and selective breakaway means.

The monitoring circuit includes the presence of the following characteristic elements:

- first means, designed to receive a first signal on their input, which is proportional to the current supplied by the relevant power unit as well as a second signal proportional to the average current value supplied by the $n$ power units and adapted also to calculate the entity of an error signal corresponding to the difference between the first signal and the second one;

- second means, designed to algebraically sum the error signal at the output of the first means to a third signal, the value of which is proportional to the voltage supplied by the relevant power unit and furthermore designed to send the signal, obtained as described above, to said control and selective breakaway means. The control means modify the level of the relevant power unit's signal until said error signal is cancelled. On the other hand, the selective breakaway means switch off the relevant power unit from the parallel connection when the signal supplied by the second means deviates from its nominal value by a predetermined entity.

Further characteristics of the invention will be more evident in the following description, which refers to on]y one embodiment of the invention given as an example and is completed by the attched drawings in which:

- fig. 1 shows a block diagram of a supply system realised according to the invention;

- fig. 2 shows in detail one of the monitoring circuit CP of fig. 1.

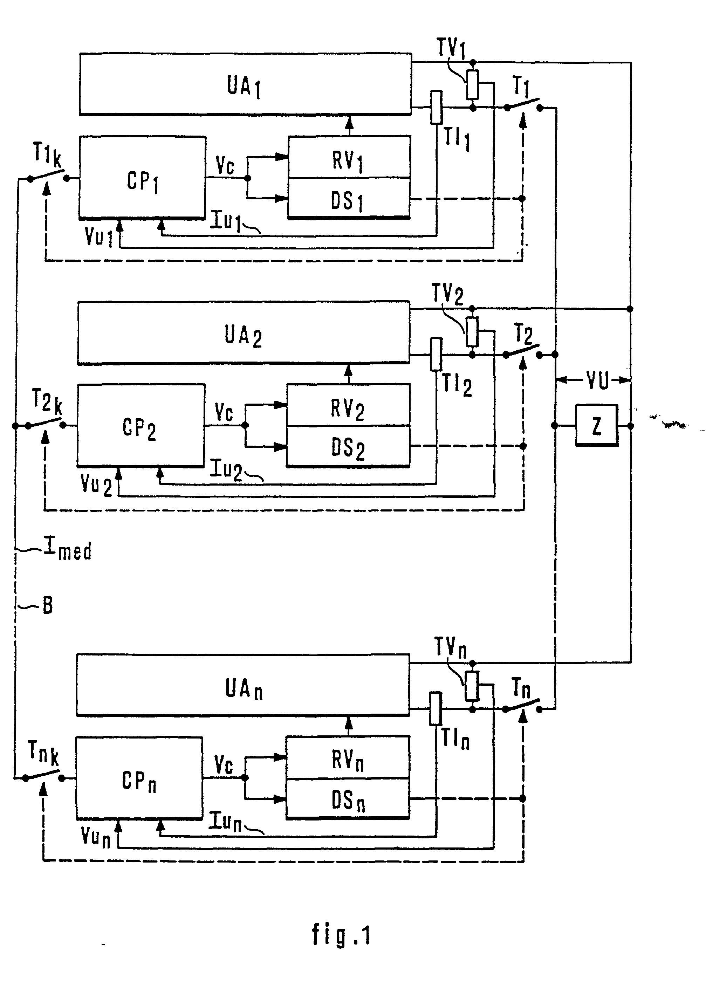

In fig. 1, $UA_1$, $UA_2$,...,$UA_n$ refer to a plurality of power units connected in parallel each to the other by means of as many switches $T_1$, $T_2$,...,$T_n$. To each power unit UA, a monitoring circuit CP, voltage control means RV and selective breakaway means DS are associated.

Each monitoring circuit CP is connected by means of a contact K of its relevant switch T to a common bus B on which there is a signal $I_{med}$ proportional to the average value of the current supplied by each power unit UA.

Furthermore, the circuits CP receive on their inputs a signal $Iu_i$ that is proportional to the current value supplied by the relevant power unit $UA_i$ and a signal $Vu_i$ proportional to the voltage supplied by the relevant unit $UA_i$. The signal $Iu_i$, is picked up by means of a respective current transducer $TI_i$, while the signal $Vu_i$ is picked up by means of a respective voltage transducer $TV_i$.

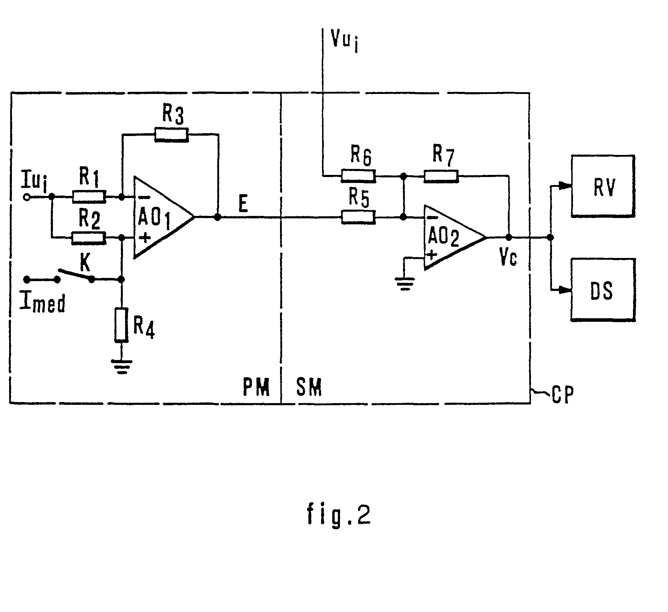

As better shown with reference to Figure 2, each circuit CP comprises first means fit to generate a first signal proportional to the difference between the signal $I_{med}$ and the relevant signal $Iu_i$, and second means fit to add the relevant signal $Vu_i$ to the first signal: the output signal Vc evidences the presence of a voltage error on the relevant power unit UA as well as its entity.

In fact, the signal Vc reaches the input of the respective voltage control means RV which modify the level of the signal generated by the relevant power unit UA until the signal Vc has its nominal value and consequently the signal generated by said unit has a value included within predetermined tolerance limits.

The signal Vc reaches also the input of the respective selective breakaway means DS which activate their own output when the difference between the signal Vc and its own nominal value evidences the presence of a failure in the relevant power unit UA. Considering that a generical power unit can be considered to be out of order when its output voltage differs for more than 5 % from its nominal value, the means DS have the task of detecting the presence of said condition and of activating their own output in order to determine the opening of the relevant switch $T_i$ thus switching off the unit UA that has failed.

Fig. 2 illustrates a generical monitoring circuit CP which is constituted by first means PM adapted to calculate the entity of the error signal E on the relevant power unit UA as well as by second means SM to algebraically sum said error signal E to a signal proportional to the voltage supplied by the relevant power unit UA.

The first means PM are constituted by an operational amplifier $AO_1$, to the inputs of which said signal $Iu_i$ (which is proportional to the current supplied by the relevant power unit) is applied by means of a first and a second resistance $R_1$ and $R_2$ of equal value. Between the output of the amplifier $AO_1$ and its inverting input a first feedback resistance $R_3$ is connected, while between its non-inverting input and the earth a second feedback resistance $R_4$ is connected having a value equal to that of the resistance $R_3$. When a generical power unit $UA_i$ is inserted into the parallel connection, the switch $T_i$ and its relevant contact $K_i$ are closed. As a consequence, the said signal $I_{med}$, which is proportional to the average value of the current supplied by the power units, reaches the non-inverting input of the unit $AO_1$.

If the resistances described above are so dimensioned as to satisfy the relationship $R_1 = R_2$ and $R_3 = R_4$, an error signal E, expressing the voltage error on the relevant power unit corresponds to the output of the unit $AO_1$. In particular, the error signal E represents a signal that is proportional to the entity of the shifting between the voltage supplied by the power unit actually under examination and the average value of the voltage supplied by the remaining (n - 1) units.

On the other hand, the means SM are constituted by a second operatiomal amplifier $AO_2$ which has its non-inverting input connected to a reference potential and its inverting input connected to the output of the unit $AO_1$ by means of a resistance $R_5$. The inverting input also receives said signal $Vu_i$ by means of a reistance $R_6$ and a feedback signal by means of a resistance $R_7$. Under normal operating conditions the output voltages of the various power units are perfectly pulled in phase. The output voltage VU applied to the load Z is equal to the average value amomg the voltages at the outputs of the various power units. Each power unit compares its own current output with the average current and adjusts its own output voltage until a current equal to the average value is supplied.

In the event that one of the power units delivers a higher current than the average current the error signal $E_i$ appears to be *in phase* to the output voltage $Vu_i$ and consequently the regulation means $RV_i$ receive a signal $Vc_i$ on their input with a higher value than the nominal one. As a consequence the means $RV_i$ arrange reduction in the current supplied by the relevant power unit $UA_i$ until said current value is more or less equal to the average one. On the contrary, if one of the power units supplies a lower current than the average current the error signal $E_i$ appears to be *in phase opposition* to the signal $Vu_i$ and consequently the regulation means $RV_i$ receive a signal $Vc_i$ on their input with a lower value than the nominal one. As a consequence the means $RV_i$ determine an increase in the current supplied by the relevant power unit $UA_i$ until said current value is more or less equal to average one.

Besides allowing the adjustment of the current supplied by the relevant power unit, the signal Vc also enables to get indications about its operation.

In fact, the weight of the signal $E_i$ has been sized in such a way that the power units which operate at nominal voltage, receive a signal Vc having a nominal value on their inputs. In particular, the weight of the error signal $E_i$ has been sized so that the error picked up on the signal $Vu_i$, due to the failure of a power unit, is the same and opposite to the contribution brought by the signal $E_i$ and consequently the signal Vc, which refers to the units operating at nominal voltage, presents a nominal value.

Viceversa, in the faulty unit the error present on the signal $Vu_i$ in consequence to the failure of said power unit, is added to the error $E_i$ and consequently the selective breakaway means $DS_i$ of the faulty unit $UA_i$ receive a signal Vc on their input that differs from the nominal value for the same error percentage that is present on the output voltage.

Let us suppose that the power system is composed of two elementary power units, the first of which is operating at nominal voltage, while the second presents an overvoltage error equal, for example, to 5 %. If the output voltage is supplied by inverters having a low output impedance, the voltage VU applied to the load will be equal to $VU_n$ (1 + 2,5 %), where $VU_n$ represents the nominal output voltage.

On the basis of what specified above, the voltage regulation means RV of the inverter *that is not faulty*, receive a signal Vc on their input having the same value the nominal signal $Vc = Vu_n$, where $Vu_n$ represents a signal that is proportional to the nominal output voltage $VU_n$. In fact:

$$(Vu_n + 2,5 \% \ Vu_n) + (- 2,5 \% \ Vu_n) = Vu_n = Vc.$$

This is due to the fact that the signal $E_i$ appears to be in phase opposition to the signal $Vu_i$ and the contribution brought by $E_i$ appears to be the same and opposite to the variation present on the signal $Vu_i$.

The voltage control circuit RV of the inverter *affected* by failure receives a signal Vc on its input that differs from the nominal value $Vc_n$ for the same error percentage that is present on the relevant power unit. In fact:

$$(Vu_n + 2,5 \% \ Vu_n) + (+ 2,5 \% \ Vu_n) = Vu_n + 5 \% \ Vu_n = Vc.$$

This is due to the fact that the signal $E_i$ is in phase with the signal $Vu_i$.

Without affecting the good working of a device according to invention, it is possible to size the weight of the signal $E_i$ in such a way that, in presence of a variation of the output voltage in the relevant power unit $UA_i$, the value variations of signals $E_i$ and $Vu_i$ are not greatly different.

The selective breakaway means DS will be not described in detail herein as they are of a well known type, being constituted by threshold circuits designed to operate their outputs whenever they receive signals on their input which differs from their own nominal value by a predetermined entity (for example 5 %).

The activation of the output of the means $DS_i$ opens the switch $T_i$ which then switches off the power unit $UA_i$ affected by failure. The voltage control means RV will be not described in detail as they are well known to person skilled in the art.

The monitoring circuits CP as claimed in the invention satisfy the requisites cited as purposed of the invention because they deliver said signal Vc, which allows to carry out said selective breakaway operations even when the output voltage deviates from the nominal value by a limited entity (for example ± 5 %). This has the advantage that the oversizing in current of the supply system, due to current distribution, can be contained within low values (5% of the nominal current). In the control systems, already known, an oversizing to the order of 10 % is required and consequently, when the power system has to supply a higher power (for example 100 KW), a 5 % reduction of the oversizing power constitutes a value not to be ignored.

Furthermore, the monitoring circuit according to the invention, is characterized by the fact that it allows adjustment of the output voltage in a very short time thus being suitable for use in combination with all types of power units, such as rectifiers, positive/negative voltage boosters or inverters.

## Claims

1. Monitoring circuit for control and selective breakaway means in a modular supply system of the type comprising *n* elementary power units, connected in parallel each to the other, to each of which said control means and selective breakaway means are associated, characterized by the fact that it includes the presence in combination of the following characteristic elements:

- first means (PM) designed to receive a first signal ($Iu_i$) on their input which is proportional to the current supplied by the respective power unit ($UA_i$), as well as a second signal ($I_{med}$) proportional to the average value of current supplied by the n power units, and also to calculate the value of an error signal ($E_i$) corresponding to the difference between the first signal ($Iu_i$) and the second one ($I_{med}$);
- second means (SM) designed to algebraically sum the error signal ($E_i$) delivered by the first means (PM) to a third signal ($Vu_i$), the value of which is proportional to the voltage supplied by the respective power unit ($UA_i$) and also designed to send the signal thus obtained to the said control (RV) and selective breakaway means (DS);

further characterized by the fact that in response to a variation of the voltage output supplied by the respective power unit ($UA_i$), the first means (PM) generate an output signal ($E_i$) which has a value similar to the variation of said third signal ($Vu_i$).

2. Circuit as described in claim 1 characterized by the fact that said first means (PM) include the presence in combination of the following charac-

7

teristic elements:

- a first operational amplifier ($AO_1$) to the inputs of which said first signal ($Iu_i$) is applied by means of a first and a second resistance of equal value ($R_1$ and $R_2$), and to the non-inverting input of which said second signal ($I_{med}$) is applied by means of a circuit breaker (K);
- a first feedback resistance ($R_3$) connected between the output of the operational amplifier ($AO_i$) and its inverting input;
- a second feedback resistance ($R_4$), having a value equal to that of the first feedback resistance ($R_3$), connected between the non inverting input of the operational amplifier and a reference potential.

3. Circuit as described in claim 1 characterized by the fact that said second means (SM) include the presence in combination of the following elementary characteristics:

- a second operational amplifier ($AO_2$), the non-inverting input of which is connected to the reference potential and the inverting input of which receives the output of the first operational amplifier ($AO_1$), by means of a third resistance ($R_5$), as well as said third signal ($Vu_i$) by means of a fourth resistance ($R_6$);
- a third feedback resistance ($R_7$) connected between the output of the second operational amplifier ($AO_2$) and its inverting input.


**Revendications**

1. Circuit de surveillance pour dispositif de contrôle et disjonction selective dans un système modulaire d'alimentation du type comprenant *n* unites élémentaires de puissance, branchées en parallèle l'une à l'autre, chacune d'elles etant branchee aux dits dispositif de contrôle et de disjonction sélective, caractérisé par le fait qu'il comprend la presence combinée des éléments caractéristiques suivants:

- le premier dispositif (PM) désignés pour recevoir sur son entrée un premier signal ($Iu_i$) qui est proportionnel au courant fourni par son unité de puissance respective ($UA_i$) et un second signal ($I_{med}$) proportionnel à la valeur moyenne de courant fourni par les unités de puissance *n*, ainsi que pour calculer la valeur d'un signal d'erreur ($E_i$), correspondant à la différence entre le premier signal ($Iu_i$) et le second signal ($I_{med}$);
- le second dispositif (SM) étudié pour additionner algébriquement le signal d'erreur ($E_i$) transmis par les premier dispositif (PM) à un troisième signal ($Vu_i$), dont la valeur est proportionnelle au voltage fourni par l'unité de puissance relative ($UA_i$) et également étudiée pour envoyer le signal ainsi obtenu au dit dispositif de contrôle (RV) et de disjonction sélective (DS); ultérieurement caractérisé par le

8

fait qu'en réponse à une variation de la tension de sortie fournie par l'unité de puissance correspondante ($UA_i$) le premier dispositif (PM) génère un signal de sortie ($E_i$) qui a une valeur semblable à la variation du dit troisième signal ($VU_i$).

2. Circuit comme décrit à la revendication 1; caractérisé par le fait que le dit premier dispositif (PM) comprend la présence combinée des éléments caractéristiques suivants:

- un premier amplificateur opérationnel ($AO_1$) aux entrées duquel le dit premier signal ($Iu_i$) est applique au moyen d'une première et d'une seconde résistance de même valeur ($R_1$ et $R_2$), et à l'entrée de non-inversion duquel le dit second signal ($I_{med}$) est appliqué au moyen d'un interrupteur de circuit (K);
- une première résistance de feed-back: ($R_3$) branchée entre la sortie de l'amplificateur opérationnel ($AO_i$) et son entrée d'inversion;
- une seconde résistance de feed-back ($R_4$) ayant une valeur égale à celle de la première résistance de feed-back ($R_3$) branchée entre l'entrée de non-inversion de l'amplificateur opérationnel et un potentiel de référence.

3. Circuit comme décrit à la revendication 1, caractérisé par le fait que les dit second dispositif (SM) comprend la présence combinée des éléments caractéristiques suivants:

- un second amplificateur opérationnel ($AO_2$), dont l'entrée de non-inversion est branchée au potentiel de référence et dont l'entrée d'inversion reçoit tant la sortie du premier amplificateur opérationnel ($AO_1$), au moyen d'une troisième résistance ($R_5$), que le dit troisième signal ($VU_i$) au moyen d'une quatrième résistance ($R_6$);
- une troisième résistance de feed-back ($R_7$) branchée entre la sortie du second amplificateur opérationnel ($AO_2$) et son entrée d'inversion.


**Patentansprüche**

1. Überwachungskreis für Steuer- und selektive Anlaufvorrichtungen in einem modularen Versorgungssystem, das *n* Elementar-Leistungseinheiten umfaßt, die parallel zueinander geschalten sind und von denen jede mit obigen Steuer- und selektiven Anlaufvorrichtungen verbunden ist, dadurch gekennzeichnet, daß er folgende, miteinander kombinierte charakteristische Elemente aufweist:

- erste Vorrichtungen (PM), die für den Empfang eines ersten Signalg ($Iu_i$) an ihrem Eingang ausgelegt sind, das sich proportional zu dem Strom verhält, der von der jeweiligen Leistungseinheit ($UA_i$) zugeführt wird, sowie

ein zweites Signal ($I_{med}$) empfangen können, das sich proportional zum Durchschnittswert des von den $n$ Leistungseinheiten zugeführten Stromes verhält und zugleich in der Lage sind, den Wert eines Fehlersignals ($E_i$) zu errechnen, der der Differenz zwischen dem ersten Signal ($Iu_i$) und dem zweiten Signal ($I_{med}$) entspricht;

- zweite Vorrichtungen (SM), die für die algebraische Summierung des von den ersten Vorrichtungen (PM) ermittelten Fehlersignals ($E_i$) und eines dritten Signals ($Vu_i$) ausgeführt sind, dessen Wert zu der von der jeweiligen Leistungseinheit ($UA_i$) zugeführten Spannung proportional ist, und die zugleich für die Übertragung des auf diese Weise erhaltenen Signals an obige Steuer- (RV) und selektive Anlaufvorrichtungen (DS) bestimmt sind:

außerdem dadurch gekennzeichnet, daß die ersten Vorrichtungen (PM) infolge der Veränderung der von der jeweiligen Leistungseinheit ($UA_i$) zugeführten Ausgangsspannung ein Ausgangssignal ($E_i$) erzeugen, dessen Wert dem der Veränderung des obigen dritten Signals ($Vu_i$) ähnlich ist.

2. Kreis gemäß Anspruch 1, dadurch gekennzeichnet, daß die genannten ersten Vorrichtungen (PM) folgende, miteinander kombinierte charakteristische Elemente aufweisen:

- einen ersten Betriebsverstärker ($AO_1$) an dessen Eingänge das erste Signal ($Iu_i$) mittels eines ersten und zweiten Widerstandes gleichen Wertes ($R_1$ und $R_2$) angelegt wird und an dessen nicht umkehrenden Eingang das zweite Signal ($I_{med}$) mittels eines Trennschalters (K) anlegt wird.
- einen ersten Rückkopplungswiderstand ($R_3$), der zwischen den Ausgang des Betriebsverstärkers ($AO_i$) und dessen umkehrenden Eingang geschalter wird;
- einen zweiten Rückkopplungswiderstand ($R_4$), dessen Wert dem des ersten Rückkopplungswiderstandes ($R_3$) gleich ist und der zwischen den nicht umkehrenden Eingang des Betriebsverstärkers und eine Bezugsspannungsquelle geschaltet ist.

3. Kreis gemäß Anspruch 1, dadurch gekennzeichnet, daß die zweiten Vorrichtungen (SM) in kombinierter Form folgende charakteristische Elemente aufweisen:

- einen zweiten Betriebsverstärker ($AO_2$), dessen nicht umkehrender Eingang mit der Bezugsspannungsquelle verbunden ist und dessen umkehrender Eingang das Ausgangssignal des ersten Betriebsverstärkers ($AO_1$) mittels eines dritten Widerstandes ($R_5$) sowie das dritte Signal ($Vu_i$) mittels eines vierten Widerstandes ($R_6$) aufnimmt.
- einen dritten Rückkopplungswiderstend ($R_7$), der zwischen den Ausgang des zweiten Be-

triebsverstärkers ($AO_2$) und dessen umkehrenden Eingang geschaltet ist.

fig.1

fig.2